# EUROPEAN PATENT SPECIFICATION

(11) **EP 1 803 686 B1**
(45) Date of publication and mention of the grant of the patent: **04.03.2009**
(21) Application number: 07100037.6
(22) Date of filing: 02.01.2007
(51) Int. Cl.: C01G 25/02

(54) **Cerium-zirconium mixed oxide and method for manufacturing the same**
Cer-Zirkonium-Mischoxid sowie Vorrichtung und Verfahren zu dessen Herstellung
Oxyde mixte de Cerium et Zirconium, et son procédé de fabrication

(30) Priority: 28.12.2005 JP 2005381336
(43) Date of publication of application: 04.07.2007
(73) Proprietor: Daiichi Kigenso Kagaku Kogyo Co., Ltd., Osaka-shi Osaka-fu (JP)
(72) Inventor: Okamoto, Hiroshi, Suminoe-ku, Osaka-shi, Osaka-fu (JP); Kodama, Hiroshi, Suminoe-ku, Osaka-shi, Osaka-fu (JP)
(74) Representative: Manley, Nicholas Michael

(56) References cited:
- EP-A- 1 621 251
- EP-A1- 0 427 938
- EP-A1- 1 035 074
- QUINELATO A L ET AL: "Effect of ceria content on the sintering of ZrO2 based ceramics synthesized from a polymeric precursor" JOURNAL OF THE EUROPEAN CERAMIC SOCIETY, ELSEVIER SCIENCE PUBLISHERS, BARKING, ESSEX, GB, vol. 20, no. 8, July 2000 (2000-07), pages 1077-1084, XP004203661 ISSN: 0955-2219
- DAVID R. LIDE, ED.: "Physical Constants of Inorganic Compounds, CRC Handbook of Chemistry and Physics, Internet version (87th version)" 2007, TAYLOR AND FRANCIS GROUP , XP002431303 * page 4, line 3 - line 4 *

## Description

### FIELD OF THE INVENTION

The present invention relates to a cerium-zirconium mixed oxide and a method for manufacturing the same.

### BACKGROUND OF THE INVENTION

Conventional zirconia substances used as catalyst supports have a specific surface area of at most about 100 m²/g at 400°C. Moreover, those having higher specific surface areas are generally amorphous, without a fixed structure. Consequently, stable properties cannot be obtained at high temperatures using a zirconia substance as a catalyst support because the specific surface area becomes too small at high temperatures of 400°C or more. Further improvements in heat resistance are therefore needed for purposes of use as a catalyst support.

By contrast, zirconia-ceria compositions consisting of zirconium oxide and cerium oxide can generally maintain a relatively large specific surface area even at a high temperature of 1000°C, and are superior as catalysts to zirconia and the like in terms of heat resistance.

Japanese Patent Publication No. 2980504 discloses that "cerium carbonate having a plate form with an aspect ratio in the range of 1.0 to 10.0 and a mean particle size of 0.5 to 50 µm" can be obtained by "reacting an aqueous cerium mineral acid salt solution with an aqueous solution having carbonate ions, and aging the resulting precipitate with cerium ions present", and also discloses a "cerium oxide having a plate form with an aspect ratio of 1.0 to 10.0 and a mean particle size of 0.5 to 50 µm, obtained by calcining the resulting cerium oxide at a temperature of at least 300°C".

However, nothing is described regarding the heat resistance of the specific surface area.

Japanese Patent Publication H7-64559 discloses "ceric oxide of needle-like crystals with a pore volume greater than 0.3 cm³/g, a mean pore size greater than 50 Å and a specific surface area of 100 m²/g or more after calcining at 350 to 450°C", which is obtained by "reacting a cerium salt with a strong base in the presence of carboxylic acid anions or reacting cerium carbonate with a strong base to prepare true cerium hydroxide, and then separating, washing and heat treating the resulting precipitate".

However, although the maximum specific surface area is described as being 117 after 6 hours of calcining at 600°C, the stability of heat-resistance at high temperatures (1000°C) is not described.

Japanese Patent Publication No. 3016865 discloses "a mixed cerium or zirconium oxide having a total pore volume of at least 0.6 cm³/g wherein at least 50% of the total pore volume consists of pores with a diameter of 10 to 100 nm", which is obtained "in a method of manufacturing a mixed cerium or zirconium oxide, by preparing a liquid mixture containing a trivalent cerium or zirconium compound; bringing this mixture into contact with (i) a carbonate or bicarbonate and (ii) a base in such a way that the pH of the reactive medium remains neutral or alkaline during the reaction; collecting a precipitate comprising a cerium carbonate compound; and calcining this precipitate", and also discloses that this oxide "has a specific surface area of at least 20 m²/g after being calcined for 6 hours at 800°C".

EP1621251 discloses the manufacture of a zirconia porous body with high thermal stability and with a total pore volume of 0.4 cm³/g. The powder has a specific surface of at least 30 m²/g after 3 hours of calcining at 1000 °C. The zirconia porous body is obtained by mixing basic zirconium sulfate-containing reaction liquid A, which is prepared by mixing a sulphating agent at 80-95°C with a zirconium salt solution at 80-95°C, with basic zirconium sulfate-containing reaction liquid B, which is prepared by mixing a sulphating agent at 65-80°C with a zirconium salt solution at 65-80°C;(B) aging the obtained reaction liquid at ≥95°C;(C) producing zirconium hydroxide by adding alkali to the obtained mixture to neutralize the basic zirconium sulphate; and(D) heat-treating the zirconium hydroxide to obtain a zirconia porous body.

However, since the maximum specific surface area is 35 m²/g after calcining for 6 hours at 900°C, the stability of heat resistance at high temperatures (1000°C) appears to be inferior.

### SUMMARY OF THE INVENTION

In light of the aforementioned problems, it is an object of the present invention to provide a cerium-zirconium mixed oxide containing "rodlike particles" of a novel form not obtained by conventional methods and having improved heat resistance of the specific surface area at a high temperature (1000°C).

As a result of exhaustive research aimed at attaining this object, the inventors in this case discovered unexpectedly that a cerium-zirconium mixed oxide comprising of spherical particles and rodlike particles can be obtained by mixing a zirconium salt with a solution obtained by adding an acid to dissolve cerium carbonate, and then adding alkali and heat treating the resulting mixed hydroxide containing cerium and zirconium, and also discovered that this cerium-zirconium mixed oxide has excellent heat resistance of the specific surface area at a high temperature (1000°C).

Based on this, the present invention provides:
1. A cerium-zirconium mixed oxide comprising spherical particles having a particle size of 5 to 20 nm and rodlike particles having a particle diameter of 5 to 20 nm and having a length of 30 to 150 nm.
2. The cerium-zirconium mixed oxide according to above 1, wherein the pore volume is 0.3 cm³/g or more and the specific surface area after 5 hours of heat treatment at 1000°C is 35 m²/g or more.
3. The cerium-zirconium mixed oxide according to above 1, further containing one or more oxides of at least one selected from the group consisting of rare earth elements excluding cerium, transitional metal elements, aluminum and silicon.
4. A method for manufacturing a cerium-zirconium mixed oxide, comprising the steps of:
   obtaining a solution containing cerium and zirconium by mixing a zirconium salt with a solution obtained by adding an acid to dissolve cerium carbonate;
   adding alkali to the solution containing cerium and zirconium to obtain a mixed hydroxide containing cerium and zirconium; and
   heat treating the mixed hydroxide containing cerium and zirconium to obtain a cerium-zirconium mixed oxide.
5. The method for manufacturing a cerium-zirconium mixed oxide according to above 4, wherein the pH of the solution of dissolved cerium carbonate is one or less.
6. The method for manufacturing a cerium-zirconium mixed oxide according to above 4, wherein one or more compounds of at least one selected from the group consisting of rare earth elements excluding cerium, transitional metal elements, aluminum and silicon are added to the solution containing cerium and zirconium.

### BRIEF DESCRIPTION OF THE DRAWINGS

Figure 1 is a TEM image (200,000 X) of the cerium-zirconium mixed oxide obtained in Example 1.
Figure 2 is a TEM image (500,000 X) of the cerium-zirconium mixed oxide obtained in Example 1.
Figure 3 is a TEM image (200,000 X) of the cerium-zirconium mixed oxide obtained in the Comparative Example.
Figure 4 is a TEM image (500,000 X) of the cerium-zirconium mixed oxide obtained in the Comparative Example.

### DETAILED DESCRIPTION OF THE INVENTION

The cerium-zirconium mixed oxide of the present invention and the manufacturing method therefor are explained in detail below.

In the present invention, "%" as used herein means "wt%" or "mass%" unless the meaning is reffered.

### 1. Cerium-zirconium mixed oxide

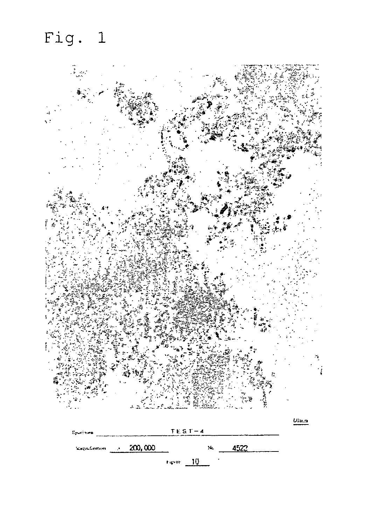

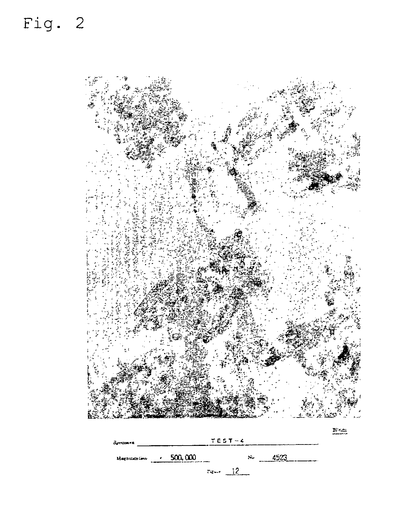

Figure 1 (200,000 X) and Figure 2 (500,000 X) show TEM images of the cerium-zirconium mixed oxide of the present invention obtained in Example 1.

As can be seen from these, the cerium-zirconium mixed oxide of the present invention is composed of spherical particles 5 to 20 nm in size and rodlike particles 5 to 20 nm in diameter and 30 to 150 nm in length.

In particular, the presence of rodlike particles of a novel form 5 to 20 nm in diameter and 30 to 150 nm in length is a feature which is not seen with conventional methods, and which appears to inhibit sintering of the particles at high temperatures, thereby improving the heat resistance of the specific surface area.

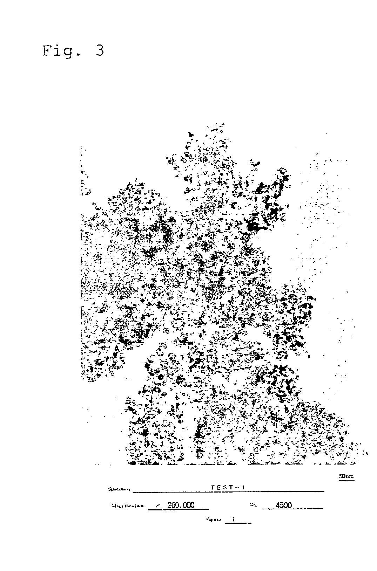

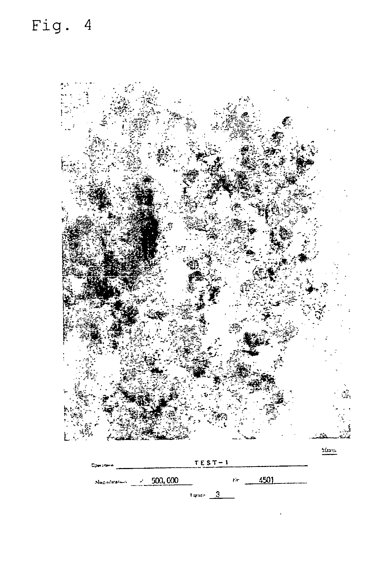

It is not clear at present why these rodlike particles are produced, but since when a cerium salt such as the cerium nitrate shown in the comparative example is used the agglomeration of spherical particles shown in Figure 3 (200,000 X) and Figure 4 (500,000 X) is obtained, while when cerium carbonate is used as the cerium source rodlike particles are only produced using a solution obtained by dissolving them in acid, it is thought that residual carbonate ions in the solution have some effect.

It is also shown that the cerium-zirconium mixed oxide of the present invention has a large total pore volume and greatly improved heat stability of the specific surface area, with a pore volume of at least 0.3 cm³/g or preferably at least 0.35 cm³/g or more preferably at least 0.40 cm³/g, and a specific surface area of at least 35 m²/g or preferably at least 40 m²/g or more preferably at least 45 m²/g after 5 hours of heat treatment at 1000°C.

If the pore volume is less than 0.3 cm³/g, the initial specific surface area will be less, and when a precious metal is loaded on the oxide the precious metal cannot be highly dispersed. If the specific surface area after 5 hours of heat treatment at 1000°C is less than 35 m²/g, the loaded precious metal will be sintered as the support thermally shrinks, promoting growth of the precious metal particles, which is not desirable.

The molar ratio of cerium to zirconium in the cerium-zirconium mixed oxide of the present invention is 5:95 to 95:5, preferably 20:80 to 80:20, more preferably 30:70 to 70:30. Outside this range, the specific surface area after 5 hours at 1000°C will be less than 35 m²/g.

The cerium-zirconium mixed oxide of the present invention may also contain as necessary one or more oxides of at least one selected from the group consisting of rare earth elements excluding cerium, transitional metal elements, aluminum and silicon.

By including these oxides it should be possible to improve the heat stability of the specific surface area.

The content of these oxides is 1 to 49%, preferably 1 to 30%, more preferably 5 to 20 of the cerium-zirconium mixed oxide that is the final product. Below 1% they will not contribute to the heat stability of the specific surface area, while above 49% they will decrease the specific surface area of the cerium-zirconium mixed oxide.

### 2. Cerium-zirconium mixed oxide manufacturing method

### (First Step)

First, in the present invention cerium carbonate is dissolved by addition of an acid.

The greatest feature of the present invention is the use of cerium carbonate as the cerium source.

Examples of cerium carbonate include cerium carbonate (III) octahydrate, cerium carbonate (IV) and the like, and a mixture of these can also be used.

In addition to nitric acid, sulfuric acid, hydrochloric acid and other inorganic acids, an organic acid can also be used as the acid as long as it is capable of dissolving the cerium carbonate.

The pH of the solution of dissolved cerium carbonate is preferably one or less. A pH of more than 1 is undesirable because hydroxide of zirconium may precipitate when the solution is mixed with a zirconium solution.

The cerium concentration in the solution of dissolved cerium carbonate is preferably 40 to 280 g as CeO₂ equivalent per 1000 g of solvent. A concentration below 40 g is industrially unsuitable because the concentration of the mixed solution will be too low, while a concentration above 280 g is undesirable because crystals of cerium nitrate may precipitate.

Next, the solution of cerium carbonate dissolved in acid is mixed with a zirconium salt.

The zirconium salt is not particularly limited as long as it provides a source of zirconium ions. For example, a zirconium inorganic acid salt such as zirconium oxynitrate, zirconium oxychloride, zirconium nitrate or the like can be used.

It is desirable to use zirconium oxychloride in the present invention for purposes of productivity on an industrial scale.

The zirconium concentration after mixing of the zirconium salt is preferably 40 g or more as ZrO₂ equivalent per 1000 g of solvent. Less than 40 g is unsuitable for industrial purposes because the concentration of the mixed solution is too dilute.

The molar ratio of cerium to zirconium is 5:95 to 95:5, preferably 20:80 to 80:20, more preferably 30:70 to 70:30. Outside this range, the specific surface area after 5 hours at 1000°C will be less than 35 m²/g.

A solution containing cerium and zirconium is thus prepared in the first step.

Of course, water (preferably pure water) can be used as necessary in this step.

### (Second Step)

Next, alkali is added to the solution containing cerium and zirconium that was prepared in the first step, thereby obtaining a mixed hydroxide containing cerium and zirconium.

The alkali is not particularly limited, and for example ammonium hydroxide, ammonium bicarbonate, sodium hydroxide, potassium hydroxide or the like can be used. The added amount of the alkali is not particularly limited as long as it produces a precipitate from the aforementioned solution, but normally it is added so as to achieve a pH of 9 or more or preferably 10 or more of the aforementioned solution.

Upon completion of the neutralization reaction, it is desirable that the solution containing the mixed hydroxide containing cerium and zirconium be maintained for 1 hour or more at 35 to 60°C in order to aging and facilitate filtering of the resulting precipitate.

The easiest way of including one or more oxides selected from the group consisting of rare earth elements (excluding cerium), transitional metal elements, aluminum and silicon in the cerium-zirconium mixed oxide which is the final product is to add one or more compounds of at least one selected from the group consisting of 1) rare earth elements (excluding cerium), 2) transitional metal elements, 3) aluminum and 4) silicon, preferably in the form of a water-soluble metal salt, to the solution containing cerium and zirconium before neutralization.

Examples of rare earth elements include Sc, Y, La, Pr, Nd and other lanthanoids, while examples of transitional metals include Ti, Cr, Mn, Fe, Co, Ni, Cu, Mo and W.

The metal salts of these are not particularly limited as long as they are water-soluble, and examples include nitrates, hydrochlorides, sulfates and other inorganic salts. A specific amount can be added so as to achieve a concentration of 1 to 49%, preferably 1 to 30%, more preferably 5 to 20% in the cerium-zirconium mixed oxide that is the final product.

The metal salt thus added is ultimately dispersed in the cerium-zirconium mixed oxide and, when calcined, forms a solid solution or mixed oxide with the cerium-zirconium mixed oxide.

A precipitate comprising the resulting mixed hydroxide containing cerium and zirconium is collected by solid-liquid separation. Solid-liquid separation can be accomplished by a known method such as filtration, centrifugation, decantation or the like. Following collection, the mixed hydroxide containing cerium and zirconium is preferably washed to remove adhering impurities.

The resulting mixed hydroxide containing cerium and zirconium can also be dried as necessary. Any known drying method can be used, such as for example natural drying, heat drying or the like. It can also be pulverized, classified or the like after the drying process.

### (Third Step)

Finally, the mixed hydroxide containing cerium and zirconium that was prepared in the second step is heat treated to produce a cerium-zirconium mixed oxide.

The heat-treatment temperature is not particularly limited, but is normally about 400 to 1100°C for 1 to 5 hours. This treatment produces the cerium-zirconium mixed oxide.

The heat-treatment atmosphere is not particularly limited, but is normally atmospheric air or an oxidizing atmosphere.

It was explained above that one or more compounds of at least one selected from the group consisting of rare earth elements (excluding cerium), transitional metal elements, aluminum and silicon, and preferably a water-soluble metal salt thereof, is added to the solution containing cerium and zirconium before neutralization. But the present invention is not limited to this. For example, one or more compounds of at least one selected from the group consisting of rare earth elements (excluding cerium), transitional metal elements, aluminum and silicon, and preferably a hydroxide and/or oxide thereof, may be added and mixed into the mixed hydroxide containing cerium and zirconium before it is heat treated.

This hydroxide and/or oxide is preferably pretreated by calcining at 1100°C or more for example so as not to greatly affect the properties of the mixed oxide containing cerium and zirconium.

### Advantages of the invention

The present invention provides a cerium-zirconium mixed oxide containing rodlike particles of a novel form not obtained by conventional methods and having a large pore volume and particularly greatly improved heat resistance of the specific surface area, which can be used favorably in the field as an exhaust gas treatment catalyst material for internal combustion engines or the like.

### (Examples)

The features of the present invention are explained more clearly below using examples. However, the present invention is not limited by the embodiments of these

### examples.

The material properties in the examples were measured as follows. Moreover, the various materials obtained in the examples and comparative examples all contain 1 to 2% by weight of hafnium oxide as an inevitable impurity.

### (1) Specific surface area

This was measured by the BET method using a surface area analyzer (Flosorb II, Micromeritics).

### (2) Pore volume and mean pore diameter

This was measured by the BJH method using an "Autosorb-1" measurement unit (Quantochrome, Model No. AS1KR). The BJH method is a method for measuring mesopores which is proposed by Barrett, Joyner, Halenda(E. P. Barrett, L.G.Joyner and P.P.Halenda, J, Am. Chem. Soc., 73, 373, (1951)).

### (Example 1)

105.1 g of cerium carbonate octahydrate crystals were dissolved in 98 g of 67.5% nitric acid to prepare a cerium nitrate solution with an oxide concentration of 20% by weight. The pH in this case was 0.4.

Next, zirconium oxychloride octahydrate was taken in the amounts of 30 g as ZrO₂ equivalent, lanthanum nitrate hexahydrate to 5 g as La₂O₃ equivalent and yttrium nitrate to 5 g as Y₂O₃ equivalent, and each was dissolved in pure water to prepare metal salt solutions. These metal salt solutions were mixed to prepare a mixed solution.

The prepared mixed solution was added to 600 g of 25% ammonia water and neutralized. The pH in this case was 10.

Next, this slurry was filtered with a Buchner funnel and washed with 2000 g of ion-exchange water.

The resulting hydroxide was calcined for 5 hours at 600°C to obtain an oxide. The specific surface area, pore volume and mean pore diameter of this oxide and the specific surface area after calcining in air for 5 hours at 1000°C were measured. The results are shown in Table 1 along with the analytical values.

Figure 1 (200,000 X) and Figure 2 (500,000 X) show TEM images of the oxide obtained in Example 1.

### (Example 2)

77.3 g of cerium carbonate octahydrate crystals were dissolved in 72 g of 67.5% nitric acid to prepare a cerium nitrate solution with an oxide concentration of 20% by weight. The pH was 0.5.

Next, basic zirconium sulfate slurry was taken in the amounts of 42 g as ZrO₂ equivalent, lanthanum nitrate hexahydrate to 9.5 g as La₂O₃ equivalent and praseodymium nitrate crystals to 4.5 g as Pr₆O₁₁ equivalent, and each was dispersed or dissolved in pure water to obtain metal salt solutions. The metal salt solutions were then mixed to prepare a mixed solution.

The prepared mixed solution was added to 600 g of 25% sodium hydroxide solution and neutralized. The pH in this case was 13 or more.

This slurry was then filtered with a Buchner filter and water washed with 5000 g of ion-exchange water. The resulting hydroxide was calcined for 5 hours at 600°C to obtain an oxide. The properties of this oxide were measured as in Example 1. The results are given in Table 1 together with the analytical values.

### (Comparative Example 1)

Cerium nitrate hexahydrate, zirconium oxychloride octahydrate, lanthanum nitrate crystals and yttrium nitrate were each taken in the amounts of 60 g as CeO₂ equivalent, 30 g as ZrO₂ equivalent, 5 g as La₂O₃ and 5 g as Y₂O₃, respectively, and dissolved separately in pure water to obtain nitrate solutions. The resulting nitrate solutions were mixed, and pure water was added to a concentration of 20% as oxide to obtain a mixed solution. The pH in this case was 0.8.

Next, this mixed solution was added to 600 g of 25% ammonia water and neutralized. The pH in this case was 10.

This slurry was then filtered with a Buchner filter, and washed with 2000 g of ion-exchange water. The resulting hydroxide was calcined for 5 hours at 600°C to obtain an oxide. The properties of this oxide were measured as in Examples. The results are given in Table 1 together with the analytical values.

Figure 3 (200,000 X) and Figure 4 (500,000 X) are TEM images of the oxide obtained in the Comparative Example.

### [Table 1]

**Table 1 Analytical values and measurement results**

| | Example 1 | Example 2 | Comparative Example 1 |
|---|---|---|---|
| ZrO₂, wt% | 28.6 | 42.0 | 29.1 |
| CeO₂, wt% | 62.3 | 44.0 | 60.7 |
| La₂O₃, wt% | 4.9 | 9.5 | 5.1 |
| Pr₆O₁₁, wt% | -- | 4.5 | -- |
| Y₂O₃, wt% | 4.1 | -- | 5.1 |
| SA, m²/g | 72.2 | 95.1 | 67.1 |
| Aged SA^{*1}, m²/g | 40.4 | 45.1 | 25.2 |
| Pore volume, cm³/g | 0.39 | 0.56 | 0.25 |
| Mean pore size, nm | 84 | 23 | 15 |

| | | | |
|---|---|---|---|
| ^{*1}: after heat treatment for 5 hours at 1000°C | | | |

Comparing the results in Table 1 particularly for Example 1 and the Comparative Example, which have the same compositions, the specific surface area after calcining for 5 hours at 1000°C (Aged SA) and pore volume were greatly improved in Example 1.

## Claims

1. A cerium-zirconium mixed oxide comprising spherical particles having a particle size of 5 to 20 nm and rodlike particles having a particle diameter of 5 to 20 nm and having a length of 30 to 150 nm.

2. The cerium-zirconium mixed oxide according to Claim 1, wherein the pore volume is 0.3 cm³/g or more and the specific surface area after 5 hours of heat treatment at 1000°C is 35 m²/g or more.

3. The cerium-zirconium mixed oxide according to Claim 1 or Claim 2, further containing one or more oxides of at least one selected from the group consisting of rare earth elements excluding cerium, transitional metal elements, aluminum and silicon.

4. A method for manufacturing a cerium-zirconium mixed oxide comprising spherical particles having a particle size of 5 to 20 nm and rodlike particles having a particle diameter of 5 to 20 nm and having a length of 30 to 150 nm, comprising the steps of:
obtaining a solution containing cerium and zirconium by mixing a zirconium salt with a solution obtained by adding an acid to dissolve cerium carbonate;
adding alkali to the solution containing cerium and zirconium to obtain a mixed hydroxide containing cerium and zirconium; and
heat treating the mixed hydroxide containing cerium and zirconium to obtain a cerium-zirconium mixed oxide.

5. The method for manufacturing a cerium-zirconium mixed oxide according to Claim 4, wherein the pH of the solution of dissolved cerium carbonate is one or less.

6. The method for manufacturing a cerium-zirconium mixed oxide according to Claim 4 or Claim 5, wherein one or more compounds of at least one selected from the group consisting of rare earth elements excluding cerium, transitional metal elements, aluminum and silicon are added to the solution containing cerium and zirconium.

## Patentansprüche

1. Cer-Zirkonium-Mischoxid, umfassend sphärische Partikel mit einer Partikelgröße von 5 bis 20 nm und stäbchenähnliche Partikel mit einem Partikeldurchmeser von 5 bis 20 nm und mit einer Länge von 30 bis 150 nm.

2. Cer-Zirkonium-Mischoxid nach Anspruch 1, worin das Porenvolumen 0,3 cm³/g oder mehr beträgt und der spezifische Oberflächenbereich nach 5-stündiger Wärmebehandlung bei 1000 °C 35 m²/g oder mehr beträgt.

3. Cer-Zirkonium-Mischoxid nach Anspruch 1 oder 2, ferner enthaltend ein oder mehr Oxid(e) von mindestens einem, das aus der Gruppe ausgewählt ist, bestehend aus Seltenerdelementen, ausschließlich Cer, Übergangsmetallelementen, Aluminium und Silizium.

4. Verfahren zum Herstellen eines Cer-Zirkonium-Mischoxids, umfassend sphärische Partikel mit einer Partikelgröße von 5 bis 20 nm und stäbchenähnlichen Partikeln mit einem Partikeldurchmesser von 5 bis 20 nm und mit einer Länge von 30 bis 150 nm, umfassend die folgenden Schritte:
Erhalt einer Lösung, enthaltend Cer und Zirkonium, durch Mischen eines Zirkoniumsalzes mit einer Lösung, die durch Zufügen einer Säure zum Auflösen von Cercarbonat erhalten wird;
Zufügen von Alkali zu der Lösung, enthaltend Cer und Zirkonium, zum Erhalt eines Mischhydroxids, enthaltend Cer und Zirkonium; und
Wärmebehandeln des Mischhydroxids, enthaltend Cer und Zirkonium, zum Erhalt eines Cer-Zirkonium-Mischoxids.

5. Verfahren zum Herstellen eines Cer-Zirkonium-Mischoxids nach Anspruch 4, worin der pH der Lösung von aufgelöstem Cercarbonat eins oder weniger beträgt.

6. Verfahren zum Herstellen eines Cer-Zirkonium-Mischoxids nach Anspruch 4 oder 5, worin eine oder mehr Verbindung(en) von mindestens einer, die aus der Gruppe ausgewählt ist, bestehend aus Seltenerdelementen, ausschließlich Cer, Übergangsmetallelementen, Aluminium und Silikon, der Lösung, enthaltend Cer und Zirkonium, zugefügt wird/werden.

## Revendications

1. Oxyde mixte cérium-zirconium, comprenant des particules sphériques ayant une taille de particules allant de 5 à 20 nm et des particules en forme de bâtonnet ayant un diamètre de particules allant de 5 à 20 nm et ayant une longueur allant de 30 à 150 nm.

2. Oxyde mixte cérium-zirconium selon la revendication 1, dans lequel le volume de pores est de 0,3 cm³/g ou plus et la surface spécifique après 5 heures de traitement thermique à 1000°C est de 35 m²/g ou plus.

3. Oxyde mixte cérium-zirconium selon la revendication 1 ou la revendication 2, contenant en outre un ou plusieurs oxydes d'au moins un élément choisi parmi le groupe constitué par les terres rares excluant le cérium, les éléments de métaux de transition, l'aluminium et le silicium.

4. Méthode de fabrication d'un oxyde mixte cérium-zirconium comprenant des particules sphériques ayant une taille de particules allant de 5 à 20 nm et des particules en forme de bâtonnet ayant un diamètre de particules allant de 5 à 20 nm et ayant une longueur allant de 30 à 150 nm, comprenant les étapes consistant à :
obtenir une solution contenant du cérium et du zirconium, en mélangeant un sel de zirconium avec une solution obtenue par l'addition d'un acide destiné à solubiliser du carbonate de cérium ;
ajouter de l'alcali à la solution contenant du cérium et du zirconium afin d'obtenir un hydroxyde mixte contenant du cérium et du zirconium ; et
traiter thermiquement l'hydroxyde mixte contenant du cérium et du zirconium afin d'obtenir un oxyde mixte cérium-zirconium.

5. Méthode de fabrication d'un oxyde mixte cérium-zirconium selon la revendication 4, dans laquelle le pH de la solution de carbonate de cérium dissous est de un ou moins.

6. Méthode de fabrication d'un oxyde mixte cérium-zirconium selon la revendication 4 ou la revendication 5, dans laquelle un ou plusieurs composés d'au moins un élément choisi parmi le groupe constitué par les terres rares excluant le cérium, les éléments de métaux de transition, l'aluminium et le silicium, sont ajoutés à la solution contenant du cérium et du zirconium.
